# EUROPEAN PATENT SPECIFICATION

(11) **EP 3 163 333 B1**
(45) Date of publication and mention of the grant of the patent: **17.07.2019**
(21) Application number: 14895643.6
(22) Date of filing: 09.09.2014
(51) Int. Cl.: G02B 5/136, G02B 27/22

(54) **RETROREFLECTOR, AND STEREOSCOPIC IMAGE DISPLAY DEVICE AND METHOD USING SAME**
RETROREFLEKTOR UND STEREOSKOPISCHE BILDANZEIGEVORRICHTUNG UND VERFAHREN DAMIT
DISPOSITIF CATADIOPTRIQUE ET PROCÉDÉ ET DISPOSITIF D'AFFICHAGE D'IMAGE STÉRÉOSCOPIQUE L'UTILISANT

(30) Priority: 27.06.2014 JP 2014132704
(43) Date of publication of application: 03.05.2017
(73) Proprietor: Asukanet Company, Ltd., Hiroshima-shi, Hiroshima 731-0138 (JP)
(72) Inventor: OTSUBO Makoto, Hiroshima-shi, Hiroshima 731-0138 (JP)
(74) Representative: Carpmaels & Ransford LLP
(86) International application number: PCT/JP2014/073780
(87) International publication number: WO 2015/198499

(56) References cited:
- WO-A1-2008/156163
- WO-A1-2009/131128
- WO-A1-2015/181994
- WO-A2-95/11467
- WO-A2-2009/082154
- JP-A- 2002 543 447
- JP-A- 2014 013 319
- US-A1- 2003 058 390

## Description

### TECHNICAL FIELD

The present invention relates to a retroreflective body with which incident light and reflected light pass through a substantially identical path, and to a volumetric image (including planar images) display apparatus and method using this retroreflective body.

### BACKGROUND ART

Retroreflective bodies using transparent spherical bodies and three-sided corner cubes are applied to traffic signs, image projection apparatuses (see Patent Literature 1) and the like since directions of incident light and reflected light nearly accord with each other. It has been known that stronger reflected light can be obtained by retroreflective bodies using the three-sided corner cubes compared to the case of those using the transparent spherical bodies. In Patent Literature 2, there has been proposed a volumetric image display apparatus using these retroreflective bodies (e.g., three-sided corner cubes). In Parent Literature 3, there is disclosed a retroreflective article with a series of reflective corners with adjacent recesses having an inclined surface. In Patent Literature 4, there is disclosed a retroreflector cube corner article which includes two sets of grooves formed in one surface. In Patent Literature 5, there is disclosed a retroreflective body having an optical block body with first and second mirror faces on one side.

### CITATION LIST

### PATENT LITERATURE

Patent Literature 1: Japanese Unexamined Patent Application Publication No. 2010-072504
Patent Literature 2: Japanese Patent No. 5466793
Patent Literature 3: WO 2009/082154 A2
Patent Literature 4: WO 95/11467 A2
Patent Literature 5: WO 2015/181994 A1 (citable for novelty only)

### SUMMARY OF INVENTION

The present invention is defined by the appended claims.

### TECHNICAL PROBLEM

However, since three-sided corner cubes have similar shapes to those obtained by being cut out from corners of cubes, there was a problem in that it is difficult to form retroreflective bodies by uniformly arranging a large number of minute three-sided corner cubes. This was a problem common to Patent Literature 1 and Patent Literature 2.

The present invention has been made in view of the above circumstances, and objects thereof are to provide a retroreflective body that can be produced relatively easily. An object of the disclosure is to provide a volumetric image display apparatus and method in which this retroreflective body is used.

### SOLUTION TO PROBLEM

In order to achieve the above objects, a retroreflective body according to a first aspect has a first optical panel and a second optical panel arranged 1) integrally, 2) in direct contact with each other, or 3) in parallel and at a distance from each other, the first optical panel being formed by arranging orthogonal first and second inclined reflective planes side by side in a triangle wave pattern in cross section, the second optical panel having a plurality of vertical reflective planes orthogonal to the first and second inclined reflective planes and in parallel with one another.

In the case of the retroreflective body according to the first aspect, one formed by arranging the band-shaped vertical reflective planes perpendicularly to a surface on one side of a transparent flat plate and at a constant pitch is also usable as the second optical panel.
In the case of the retroreflective body according to the first aspect, the vertical reflective planes in the second optical panel can also be formed by depositing metal on vertical planes of longitudinal grooves each formed in a transparent flat plate with a predetermined interval from a side of the transparent flat plate.

In the case of the retroreflective body according to the first aspect, cross sections of the longitudinal grooves can also be serrated, the cross sections each having one each of the vertical planes and groove inclination planes. Additionally, in the case of the retroreflective body according to the first aspect, it is preferred that the first and second inclined reflective planes be formed by depositing metal on inclined planes each having a cross section of an isosceles right triangle.

A volumetric image display apparatus according to a second aspect has the retroreflective body according to the first aspect and a half mirror arranged orthogonal or inclined with respect to the retroreflective body. It is preferred that a crossing angle of the retroreflective body and the half mirror be, for example, in the range of 30 to 150 degrees. A formation position of a real image of an object can thereby be changed.

A volumetric image display method according to a third aspect includes arranging a half mirror on a retroreflective body in a crossed state, making light rays from an object having passed through the half mirror reflect off the retroreflective body and further reflect off the half mirror, and forming a real image of the object, the retroreflective body being formed by arranging orthogonal first and second inclined reflective planes in a triangle wave pattern in cross section on one surface of a plate-like transparent block body, the retroreflective body being provided with vertical reflective planes orthogonal to the first and second inclined reflective planes on the other surface of the transparent block body.

### ADVANTAGEOUS EFFECTS

Since the retroreflective body according to the first aspect and the volumetric image display apparatus according to the second aspect have the first optical panel and the second optical panel arranged 1) integrally, 2) in direct contact with each other, or 3) in parallel and at a distance from each other, the first optical panel being formed by arranging the orthogonal first and second inclined reflective planes side by side in a triangle wave pattern in cross section, the second optical panel having the plurality of vertical reflective planes arranged orthogonal to the first and second inclined reflective planes and in parallel with one another, shaping becomes easy, production of accurate transparent block bodies by, for example, press molding or injection molding becomes possible, and the transparent block bodies can be produced at a low cost and in large quantity.

Since the volumetric image display apparatus according to the second aspect and the volumetric image display method according to the third aspect use the retroreflective body that can be made easily in large quantity and the half mirror, the volumetric image display apparatus can be produced at a low cost.

### BRIEF DESCRIPTION OF DRAWINGS

FIG. 1 is an elevation view of a retroreflective body according to a first embodiment of the present invention.
FIG. 2 is a plan view of the same retroreflective body.
FIG. 3 is a side view of the same retroreflective body.
FIG. 4 is an elevation view of a retroreflective body according to an example.
FIG. 5 is a perspective view of a retroreflective body according to an example.
FIG. 6 is a plan view of the same retroreflective body.
FIG. 7 is an explanatory diagram of a volumetric image display apparatus that uses a retroreflective body.

### DESCRIPTION OF EMBODIMENTS

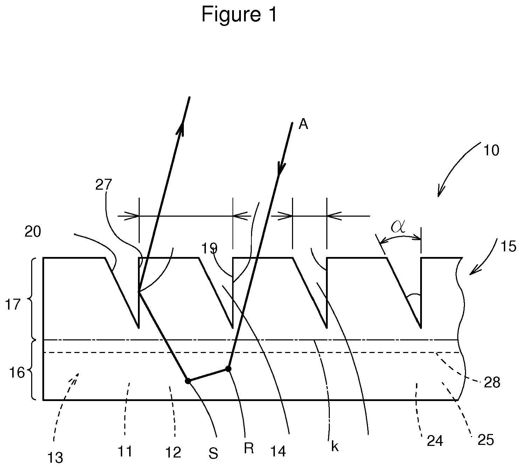

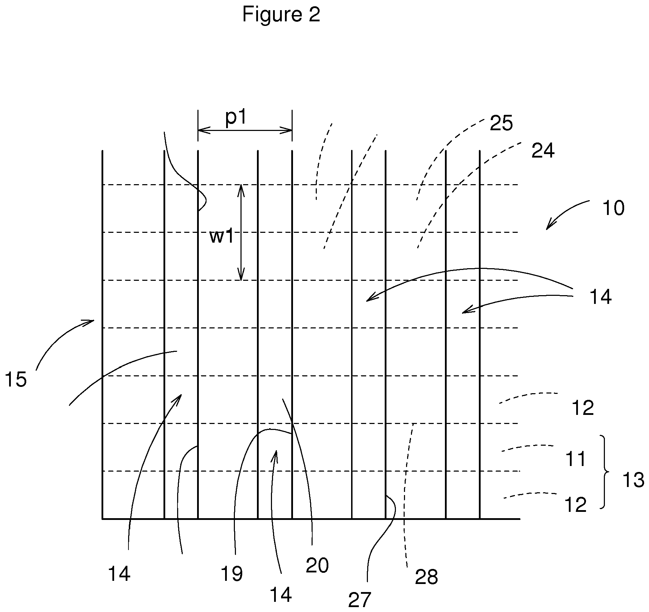

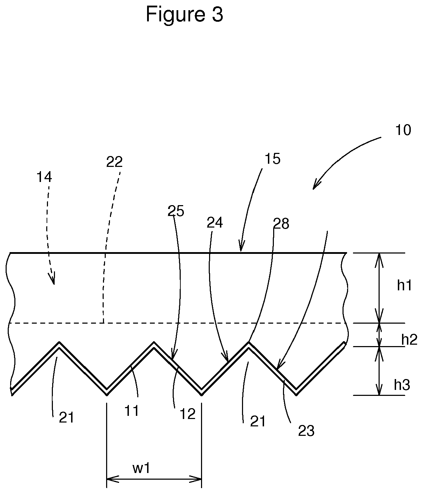

Next, with reference to the accompanying drawings, descriptions will be given on embodiments of the present invention.
As illustrated in FIGS. 1 to 3, a retroreflective body 10 according to a first embodiment of the present invention uses, as a base material, a plate-like transparent block body (i.e., transparent flat plate) 15 in which inclined grooves (transverse grooves) 13 provided with first and second inclined planes 11 and 12 that are adjacent in a width direction and orthogonal to one another are formed in parallel on one surface (in this embodiment, a back surface), and in which longitudinal grooves 14 are (provided standing) arranged at intervals (pitches) p1 and in plurality on the other surface (in this embodiment, a front surface).

It is preferred that glass, or thermoplastic or thermosetting transparent plastic be used as a material for this transparent block body 15. The first and second inclined planes 11 and 12 arranged in a triangle wave pattern in cross section (more specifically, isosceles right triangles in cross section) and the longitudinal grooves 14 each having an acute angle α, widened outwardly (upwardly) and serrated in cross section can be molded using a press or a molding roller. However, it is preferred that the first and second inclined planes 11 and 12 and the longitudinal grooves 14 be injection-molded using a thermoplastic transparent plastic. As molding methods of other types, well-known techniques such as a printing method using lithographs, etc. and exposure printing method using ultraviolet curable resin, etc. and the like may be applied. Since the plurality of grooves and a plurality of concavities and convexities each are formed in one direction, the first and second inclined planes 11 and 12 and the longitudinal grooves 14 may be formed by machining. It is preferred that a maximum width p2 of each of the widened longitudinal grooves 14 be, for example, 0.1 to 0.5 times the pitch p1 between each of the longitudinal grooves 14.

As illustrated in FIGS. 1 to 3, each of the longitudinal grooves 14 has one each of vertical planes 19 and groove inclination planes 20, and the vertical planes 19 are arranged in parallel with one another, and are orthogonal to the first and second inclined planes 11 and 12 in plan view. A depth h1 of each of the longitudinal grooves 14 is, for example, 1 to 4 times a depth h3 of each of valley portions 21 formed by the first and second inclined planes 11 and 12. A distance h2 from each of bottom portions 22 of the longitudinal grooves 14 to a corresponding one of the valley portions 21 is about 0.1 to 1 times the depth h3 of each of the valley portions 21. It is preferred that the numbers of the valley portions 21 and the longitudinal grooves 14 be in the range of more than 100 and 2000 or less with respect to a single transparent block body 15.
It is preferred that a width w1 of each of the first and second inclined planes 11 and 12 be about 0.5 to 3 times the pitch p1 between each of the longitudinal grooves 14.

Roughness of surfaces of the first and second inclined planes 11 and 12 are, for example, about 10 to 50 nm, and a metal 23 such as aluminum, silver, titanium and the like is deposited on the surfaces. The first and second inclined planes 11 and 12 thereby successively form first and second inclined reflective planes (mirror planes) 24 and 25 orthogonal to one another and in a triangle wave pattern in cross section.

On the other hand, the vertical planes 19 to be formed inside the longitudinal grooves 14 are orthogonal to the first and second inclined reflective planes 24 and 25 (the first and second inclined planes 11 and 12), however, it is also possible to form different reflective planes (vertical reflective planes) that totally reflect light from the first and second inclined reflective planes 24 and 25. Here, it is also possible to deposit metal on the vertical planes 19 so as to be vertical reflective planes 27. It is preferred that the groove inclination planes 20 opposed to the vertical reflective planes 27 be preliminarily subjected to a non-reflection plane treatment (e.g., pearskin treatment) so as not to act as reflective planes.

The retroreflective body 10, as illustrated by a dot-and-dash line k in FIG. 1, is vertically divided into two parts, of which a lower side being the first optical panel 16 in which the first and second inclined reflective planes 24 and 25 are formed side by side and of which an upper side being the second optical panel 17 in which the vertical reflective planes 27 are formed in plurality. However, it is also possible to produce the first optical panel 16 and the second optical panel 17 separately. In such a case, the production is made easy since only one side of each of two transparent flat plates have to be molded. The first and second optical panels 16 and 17 may be produced in an integrated state from a single transparent block body 15 as with the retroreflective body 10 according to the first embodiment, or may be produced separately and then be arranged in direct contact with each other or in parallel with and at a distance from each other. In the case of producing the transparent block body 15 from a single material, it is preferred that injection molding be performed using a thermoplastic resin as a raw material.

Therefore, in FIG. 1, light rays from an object (or a light source) A reflect off R and S on a corresponding one each of the first and second inclined reflective planes 24 and 25, then reflect off T on a corresponding one of the vertical reflective planes 27, and reflect recursively. In the case of using this retroreflective body 10, since a distance of the retroreflective body 10 from the object A is long enough compared to the width w1 of each of the first and second inclined reflective planes 24 and 25 and the pitch p1 between each of the longitudinal grooves 14, light incident on the retroreflective body 10 and reflected light from the retroreflective body 10 substantially accord with each other. Numeral 28 indicates crossing portions where the first inclined reflective planes 24 and the second inclined reflective planes 25 cross (i.e., valley bottom portions). Since the surface of the transparent block body 15 transmits light rays from the object A or light rays (reflected light rays) trying to form an image, it is preferred that the surface be smooth, for example, with a roughness of about 10 to 200 nm (the same applies to embodiments below).

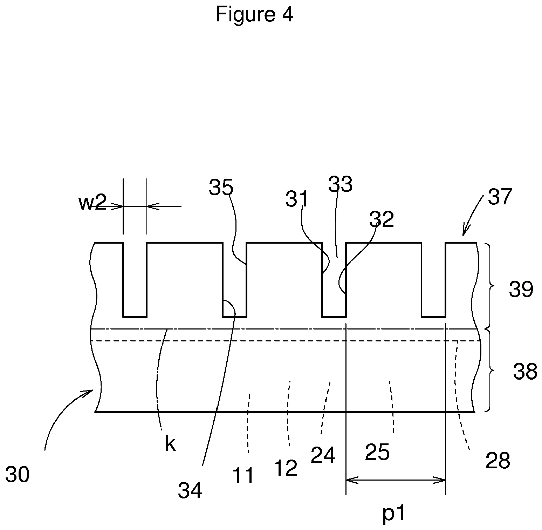

Next, descriptions will be given on a retroreflective body 30 according to an example illustrated in FIG. 4. Components the same as those in the retroreflective body 10 according to the first embodiment will be indicated by the same signs and numerals, and descriptions on these components will be omitted.
The longitudinal grooves 14 each having a serrated cross section were used in the retroreflective body 10, however, in the retroreflective body 30, longitudinal grooves 33 having parallel or nearly parallel side surfaces 31 and 32 and having vertically-long rectangular cross sections or U-shaped cross sections can be used. In this case, the side surfaces 31 and 32 are made to be either total reflection planes without any change or vertical reflective planes (mirror planes) 34 and 35 by depositing metal inside the longitudinal grooves 33. It is preferred that a width w2 of each of the longitudinal grooves 33 be 0.05 to 0.3 times a pitch p1 at which each of the longitudinal grooves 33 is formed, however, the present invention is not to be limited to these numerical values. For shaping with a mold, the longitudinal grooves 33 may be slightly tapered.

The vertical reflective planes 34 and 35 can be selected appropriately depending on a direction of light, and in the case of depositing metal inside the longitudinal grooves 33, it is preferred that transparent or non-transparent resin be filled inside the longitudinal grooves 33. In order for bottom portions of the longitudinal grooves 33 not to form mirror planes, the bottom portions may be subjected to a roughening treatment or a non-transmission treatment (e.g., coating with paint).
The first and second inclined reflective planes 24 and 25 and the vertical reflective planes 34 or 35, as a plurality of corner cubes in which they are orthogonal to one another, thereby form the retroreflective body 30.

The vertical reflective planes 34 and 35 were formed on an adverse side of the single plate-like transparent block body (transparent flat plate) 37, and the first and second inclined reflective planes 24 and 25 were formed on a reverse side of the transparent block body 37 also in this example. However, as illustrated by a dot-and-dash line k in FIG. 4, the transparent block body 37 may be divided into two parts so as to be a second optical panel 39 having the vertical reflective planes 34 and 35 and a first optical panel 38 having the first and second inclined reflective planes 24 and 25. The first and second optical panels 38 and 39 are joined to be integrated with each other, in direct contact with each other, or arranged with a slight interspace between them.

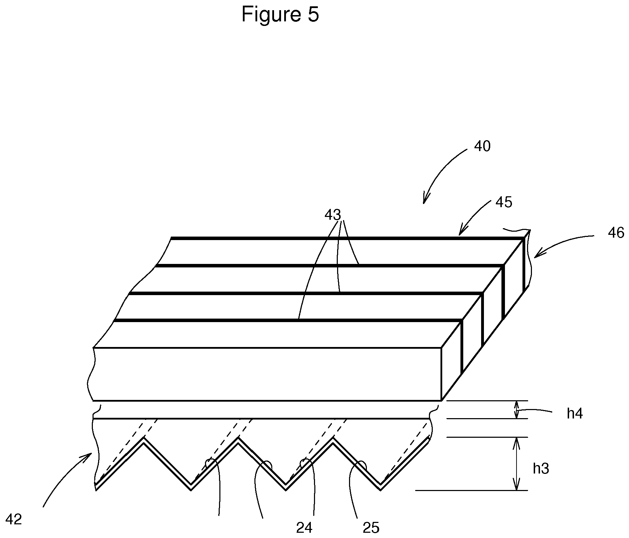

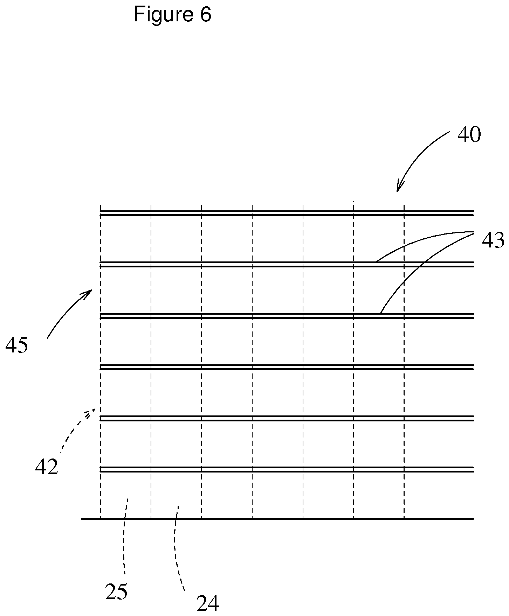

Next, with reference to FIGS. 5 and 6, descriptions will be given on a retroreflective body 40 according to a further example. This retroreflective body 40 has a first optical panel 42 formed by arranging orthogonal first and second inclined reflective planes 24 and 25 side by side in a triangle wave pattern in cross section, and a second optical panel 45 in which vertical reflective planes 43 orthogonal to the first and second inclined reflective planes 24 and 25 and arranged in parallel with one another are formed in plurality.

The second optical panel 45 is formed by arranging the band-shaped vertical reflective planes 43 perpendicularly to a surface on one side of a transparent flat plate 46 at a constant pitch. A producing method of this second optical panel 45 is described in detail in, for example, Japanese Patent No. 5085631.
It is preferred that an interspace h4 between the first optical panel 42 and the second optical panel 45 be 0 (in direct contact with each other), however, the interspace h4 can be changed depending on an intended use. Enlarging the interspace h4 decreases an amount of light passing through the first and second inclined reflective planes 24 and 25 and the vertical reflective planes 43 that form cubic corners, and thus it is not preferable.

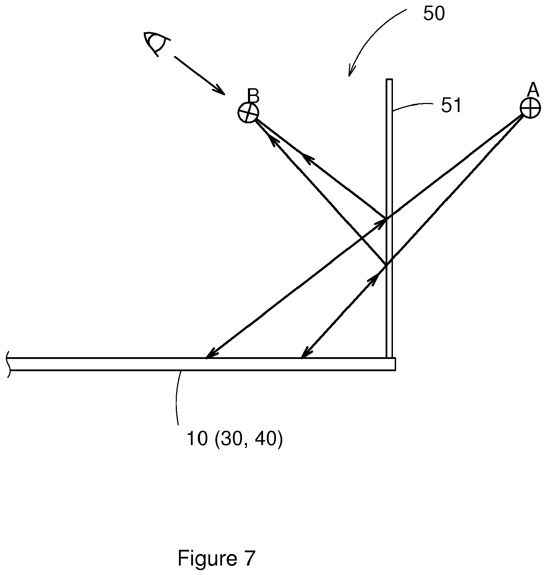

Next, with reference to FIG. 7, descriptions will be given on a volumetric image display apparatus 50 and volumetric image display method that use the retroreflective body 10 (the same applies to the case where the retroreflective body 30 or 40 is used). The planar retroreflective body 10 is prepared, and a half mirror 51 is provided standing (arranged in a crossed state, i.e., arranged orthogonally or inclinedly) on the retroreflective body 10 at a crossing angle of 30 to 150 degrees (90 degrees in this example, however, a range of 80 to 100 degrees is preferable) to the retroreflective body 10.

Light rays emitted from an image (object) A thereby pass through the half mirror 51, recursively reflect off the retroreflective body 10, reflect off the half mirror 51, and form an image (real image) B.
In the case of this volumetric image display apparatus 50, since it is easy to produce the retroreflective body 10 (or 30 or 40), an overall cost is reduced.

The present invention is not to be limited to the above embodiment, and the structures can be changed within the scope of the present invention as defined by the claims. For example, roughness forming each of the reflective planes can be more or less than the range of 10 to 50 nm as long as 80% or more of incident light is regularly reflected with that roughness.
Moreover, it is also possible to fill transparent or non-transparent resin in the valley portions 21 to be formed by the first and second inclined planes 11 and 12, and in some cases, non-transparent resin and the like is filled in the longitudinal grooves.

Furthermore, in the case of the volumetric image display apparatus 50 illustrated in FIG. 7, an image (e.g., a real image A) can be formed on the right side of the half mirror 51 also by arranging an object (e.g., B) on the left side of the half mirror 51, making light rays reflect off the half mirror 51, and making the light rays recursively reflect off the retroreflective body 10 and pass through the half mirror 51.

### INDUSTRIAL APPLICABILITY

By simplifying the structure of retroreflective bodies in which corner cubes are used that have been difficult to produce even though the fundamentals have always been known, inexpensive retroreflective bodies, and a volumetric image display apparatus and volumetric image display method that use these retroreflective bodies can be provided.

### REFERENCE SIGNS LIST

10: retroreflective body, 11: first inclined plane, 12: second inclined plane, 13: inclined groove, 14: longitudinal groove, 15: transparent block body, 16: first optical panel, 17: second optical panel, 19: vertical plane, 20: groove inclination plane, 21: valley portion, 22: bottom portion, 23: metal, 24, 25: first and second inclined reflective plane, 27: vertical reflective plane, 28: crossing portion, 30: retroreflective body, 31, 32: side surface, 33: longitudinal groove, 34, 35: vertical reflective plane, 37: transparent block body, 38, 39: first and second optical panel, 40: retroreflective body, 42: first optical panel, 43: vertical reflective plane, 45: second optical panel, 46: transparent flat plate, 50: volumetric image display apparatus, 51: half mirror

## Claims

1. A retroreflective body (10), comprising:
a plate-like transparent block body (15) comprising:
transverse grooves (13) each having an isosceles right triangle shaped cross section and provided with first and second inclined reflective planes (24, 25) being orthogonal to one another, the transverse grooves (13) being formed side by side in parallel on a back surface of the plate-like transparent block body (15); and
longitudinal grooves (14) having vertical reflective planes (27) being orthogonal to the first and second inclined reflective planes (24, 25) and groove inclination planes (20) opposed to the vertical reflective planes (27), the longitudinal grooves (14) arranged in parallel with one another at a constant pitch (p1) on a front surface of the plate-like transparent block body (15), wherein the longitudinal grooves (14) widen outwardly and are serrated in cross section, such that cube corners are formed with the first and second reflective planes and corresponding vertical reflective planes.

2. The retroreflective body according to claim 1, wherein a depth (h1) of each of the longitudinal grooves (14) is 1 to 4 times a depth (h3) of each of the transverse grooves (13), and a distance (h2) between each of the longitudinal grooves (14) and a corresponding one of the transverse grooves (13) is 0.1 to 1 times the depth (h3) of each of the transverse grooves (13).

3. The retroreflective body according to any one of claims 1 or 2, wherein a maximum width (p2) of each of the widened longitudinal grooves (14) is 0.1 to 0.5 times the pitch (p1) between each of the longitudinal grooves.

## Patentansprüche

1. Retroreflektierender Körper (10), umfassend:
einen plattenartigen transparenten Blockkörper (15), umfassend:
Querfurchen (13), die jeweils eine Querschnittsform eines gleichschenkligen, rechtwinkligen Dreiecks aufweisen und mit einer ersten und einer zweiten geneigten reflektierenden Ebene (24, 25), die zueinander orthogonal sind, versehen sind, wobei die Querfurchen (13) nebeneinander parallel auf einer Rückoberfläche des plattenartigen transparenten Blockkörpers (15) ausgebildet sind; und
Längsfurchen (14), die vertikale reflektierende Ebenen (27) aufweisen, die orthogonal zu der ersten und der zweiten geneigten reflektierenden Ebene (24, 25) sind, und Furchenneigungsebenen (20), die den vertikalen reflektierenden Ebenen gegenüberliegen, wobei die Längsfurchen (14) parallel zueinander unter einem konstanten Abstand (p1) auf einer Frontoberfläche des plattenartigen transparenten Blockkörpers (15) angeordnet sind, wobei sich die Längsfurchen (14) nach außen hin aufweiten und einen gezackten Querschnitt aufweisen, so dass mit der ersten und der zweiten reflektierenden Ebene und den entsprechenden vertikalen reflektierenden Ebenen Würfelecken ausgebildet werden.

2. Retroreflektierender Körper nach Anspruch 1, wobei eine Tiefe (h1) von jeder der Längsfurchen (14) ein 1-bis 4-Faches der Tiefe (h3) von jeder der Querfurchen (13) ist und eine Distanz (h2) zwischen jeder der Längsfurchen (14) und einer entsprechenden der Querfurchen (13) ein 0,1- bis 1-Faches der Tiefe (h3) von jeder der Querfurchen (13) ist.

3. Retroreflektierender Körper nach einem der Ansprüche 1 oder 2, wobei eine Maximalbreite (p2) von jeder der aufgeweiteten Längsfurchen (14) ein 0,1- bis 0,5-Faches des Abstands (p1) zwischen jeder der Längsfurchen ist.

## Revendications

1. Corps catadioptrique (10), comprenant :
un corps formant bloc transparent de type plaque (15), comprenant :
des rainures transversales (13) ayant chacune une section transversale en forme de triangle rectangle isocèle et pourvues de premier et deuxième plans réfléchissants inclinés (24, 25) perpendiculaires l'un à l'autre, les rainures transversales (13) étant formées côte à côte en parallèle sur une surface arrière du corps formant bloc transparent de type plaque (15) ; et
des rainures longitudinales (14) ayant des plans réfléchissants verticaux (27) perpendiculaires aux premier et deuxième plans réfléchissants inclinés (24, 25) et des plans d'inclinaison de rainures (20) opposés aux plans réfléchissants verticaux (27), les rainures longitudinales (14) étant disposées en parallèle les unes aux autres suivant un pas constant (p1) sur une surface avant du corps formant bloc transparent de type plaque (15), les rainures longitudinales (14) s'élargissant vers l'extérieur et étant crantées en section transversale de telle sorte que des coins cubiques soient formés avec les premier et deuxième plans réfléchissants et les plans réfléchissants verticaux correspondants.

2. Corps catadioptrique selon la revendication 1, dans lequel une profondeur (h1) de chacune des rainures longitudinales (14) mesure 1 à 4 fois une profondeur (h3) de chacune des rainures transversales (13), et une distance (h2) entre chacune des rainures longitudinales (14) et l'une correspondante des rainures transversales (13) mesure 0,1 à 1 fois la profondeur (h3) de chacune des rainures transversales (13).

3. Corps catadioptrique selon l'une quelconque des revendications 1 ou 2, dans lequel une largeur maximale (p2) de chacune des rainures longitudinales élargies (14) mesure 0,1 à 0,5 fois le pas (p1) entre chacune des rainures longitudinales.
